# EUROPÄISCHE PATENTSCHRIFT

(11) **EP 2 017 753 B1**
(45) Veröffentlichungstag und Bekanntmachung des Hinweises auf die Patenterteilung: **07.11.2018**
(21) Anmeldenummer: 08160773.1
(22) Anmeldetag: 18.07.2008
(51) Int. Cl.: G06F 17/30

(54) **VERFAHREN ZUR STEUERUNG VON DATENBANKÜBERGREIFENDEN ROUTINEN**
METHOD FOR CONTROLLING ROUTINES ACROSS DATABASES
PROCÉDÉ DE CONTRÔLE DE ROUTINES À TRAVERS DE MULTIPLES BASES DE DONNÉES

(30) Priorität: 20.07.2007 DE 102007034480
(43) Veröffentlichungstag der Anmeldung: 21.01.2009
(73) Patentinhaber: Vodafone Holding GmbH, 40213 Düsseldorf (DE)
(72) Erfinder: Lasinski, Gerald Vodafone Holding GmbH, 40547 Düsseldorf (DE); Castaneda, Manuel Vodafone Holding GmbH, 40549 Düsseldorf (DE)
(74) Vertreter: Kreutzer, Ulrich

(56) Entgegenhaltungen:
- EP-A- 0 657 813
- WO-A-96/21190
- US-A- 5 835 757

## Beschreibung

Die Erfindung betrifft ein Verfahren zur Steuerung von datenbankübergreifenden Routinen.

WO 96/21190 A (IBM [US]; PLATT MICHAEL [GB]; STANFORD CLARK ANDREW JAMES [GB]; WALLIS) 11. Juli 1996 (1996-07-11). Es wird ein verteiltes Datenbanksystem beschrieben. Das System besteht aus einem Server, in dem sich der Prallel Query Decomposer befindet und einer Datenbank mit mehreren Datenbankservern. Der Parallel Query Decomposer nimmt Anfragen einer Anwendung entgegen und parallelisiert entsprechend der Inhalte der verteilten Datenbankserver, die mit den Datenbankeinheiten der Anmeldung korrespondieren, soweit wie möglich die Anfragen. Die parallelisierten Anfragen werden an die verteilten Datenbankserver geschickt und dort verarbeitet.

Es werden heutzutage für individuelle Informationsklassen, wie etwa unterschiedliche Kundenarten, häufig separate und eigenständige Datenbankeneinheiten aufgebaut. Dabei können mittels eines Eingabesystems Informationen in die verschiedenen Datenbankeinheiten eingegeben werden, wobei im Allgemeinen jede der Informationsklassen ein individualisierendes Attribut aufweist. Bei diesem Attribut kann es sich beispielhaft um den Typ eines Vertrages eines Kunden mit einem Telekommunikationsunternehmer handeln. Moderne Telekommunikationsunternehmen bieten heutzutage eine Vielzahl von unterschiedlichen Typen von Verträgen an. So kann einerseits im Vorhinein ein Gesprächsguthaben käuflich erworben und dann verbraucht werden. Von jenem Prepaid-Vertrag unterscheidet sich anderseits die Möglichkeit, eine feste Vereinbarung mit einem Telekommunikationsunternehmen abzuschließen und die in Anspruch genommene Dienstleistung im Nachhinein zu bezahlen. Für jeden dieser Vertragstypen wird heutzutage eine individuelle Datenbankeinheit aufgebaut, in der die Kundendaten gespeichert werden. Es ist zur Zeit nicht möglich, die Datenbankeneinheiten der einzelnen Kundenklassen untereinander synchron/zeitnah zu betreiben.

Es ist daher Aufgabe der vorliegenden Erfindung, ein Verfahren zur Steuerung von datenbankübergreifenden Routinen sowie ein Datenbankensystem zu schaffen, bei dem die genannten Nachteile vermieden werden, insbesondere eine synchrone Verarbeitung von Informationsgruppen in mehreren unabhängigen Datenbankeinheiten möglich ist.

Die Aufgabe wird erfindungsgemäß durch ein Verfahren zur Steuerung von datenbankübergreifenden Routinen mit den Merkmalen gemäß des unabhängigen Patentanspruches 1 sowie ein Datenbanksystem mit den Merkmalen gemäß des unabhängigen Anspruches 13 gelöst. In den abhängigen Ansprüchen sind bevorzugte Weiterentwicklungen der Erfindung aufgeführt. Merkmale und Details, die im Zusammenhang mit dem erfindungsgemäßen Verfahren beschrieben sind, gelten dabei selbstverständlich auch im Zusammenhang mit dem erfindungsgemäßen Datenbanksystem und jeweils umgekehrt.

Erfindungsgemäß wird die Aufgabe durch ein Verfahren zur Steuerung von datenbankübergreifenden Routinen gelöst, um Daten in einer Mehrzahl von Datenbankeinheiten quasi parallel zu manipulieren, wobei an einer Zentraleinheit eine Mehrzahl von Eingabesystemen angeschlossen sind, jede Datenbankeinheit eine Datenbank und ein Applikationselement aufweist, mit einer auf dem Applikationselement ausführbaren Applikationsroutine, jeder Datenbankeinheit eine eindeutige Informationsklasse zugeordnet ist, in jeder Datenbankeinheit Informationselemente einer eindeutigen Informationsklasse hinterlegt sind, wobei das Verfahren die folgenden Schritte umfasst:
- mittels eines Eingabesystems wird eine Informationsgruppe in die Zentraleinheit eingegeben, wobei die Informationsgruppe mehrere Informationselemente beinhaltet und jedes Informationselement einer Informationsklasse zugeordnet ist,
- in einer Zuordnungsroutine in der Zentraleinheit die Informationsgruppe in die Informationselemente zerlegt wird,
- die Zuordnungsroutine die Informationselemente in Abhängigkeit von der Informationsklasse an die der Informationsklasse zugeordnete Datenbankeinheit übermittelt,
- die Applikationsroutinen in den Datenbankeinheiten die Informationselemente in Subelemente zerlegt,
- die Subelemente quasi parallel in den Datenbanken verarbeitet werden.

Das erfindungsgemäße Verfahren ermöglicht die Steuerung von Routinen, welche auf sowohl logisch als auch räumlich getrennte Datenbankeinheiten zugreifen. Jede Datenbankeinheit ist für eine eindeutige Informationsklasse, wie etwa einen Vertragstyp eines Mobilfunknetzbetreibers, erstellt und speichert die in dieser Informationsklasse hinterlegten Informationen. Im Rahmen einer Eingabe einer Informationsgruppe ist erfindungsgemäß vorgesehen, dass auf mindestens zwei Datenbankeinheiten quasi parallel zugegriffen werden muss. Dieses könnte etwa dann geschehen, wenn eine Person mehrere unterschiedliche Verträge bei einem Mobilfunknetzbetreiber abgeschlossen hat. Bei einer Veränderung oder Verlängerung eines dieser Verträge kann es oftmals geschehen, dass gleichzeitig mehrere der älteren Verträge geändert werden müssen. Folglich ist es notwendig, dass quasi parallel auf mehrere Datenbankeinheiten zugegriffen werden muss. Im Rahmen der Erfindung bedeutet die quasi parallele Verarbeitung, dass die Informationselemente bzw. Subelemente im Wesentlichen gleichzeitig verarbeitet werden. Es ist dabei keineswegs auf eine strenge Parallelität bei der Bearbeitung und/oder dem Zugriff auf die Datenbank auszugehen. Vielmehr bedeutet ein quasi paralleler Zugriff, dass die Routinen innerhalb einer für ein Datenverarbeitungssystem geringen Zeitspanne annähernd gleichzeitig bearbeitet werden. Abzugrenzen ist die quasi parallele Verarbeitung von einem sequentiellen Zugriff auf die einzelnen Datenbanken. Sequentielle Zugriffe benötigen eine wesentlich größere Zeitspanne als ein quasi paralleler Zugriff.

Die Besonderheit des erfindungsgemäßen Verfahrens liegt in der zweifachen Aufteilung der Informationsgruppe sowie der zweifach quasi parallelen Verarbeitung. Die erste Aufteilung der Informationsgruppe geschieht in der Zentraleinheit. Innerhalb der Zentraleinheit wird die Informationsgruppe in einzelne Informationselemente zerlegt, welche quasi parallel an die Datenbankeinheiten übermittelt werden. Innerhalb der jeder Informationsklasse zugeordneten Datenbankeinheit findet eine weitere Aufteilung der Informationselemente in Subelemente statt. Diese Subelemente werden wiederum quasi parallel verarbeitet. Es findet also gleichzeitig eine quasi parallele Verarbeitung der Subelemente, als auch eine quasi parallele Verarbeitung der Informationselemente in den Datenbankeinheiten statt. Durch diese doppelte Aufteilung und doppelte quasi parallele Verarbeitung ist es möglich, auch komplexe Manipulationen in mehreren räumlich und/oder logisch getrennten Datenbankeinheiten schnell und im Wesentlichen synchron durchzuführen.

Das erfindungsgemäße Verfahren wird genutzt zur Steuerung eines Datenbanksystems mit einer Mehrzahl von Eingabesystemen und einer Mehrzahl von Datenbankeinheiten. Dabei ist erfindungsgemäß vorgesehen, dass die Eingabesysteme und/oder die Datenbankeinheiten keine räumliche Verbindung aufweisen müssen. Bei dem Eingabesystem kann es sich beispielhaft um ein Terminal handeln, welches über ein Netzwerk mit der Zentraleinheit verbunden ist. Weiterhin kann es sich bei dem Eingabesystem auch um einen Rechner handeln, der bei einem Einzelhändler aufgestellt ist und mit dem Zentralrechner eines Herstellers oder Dienstleistungsanbieters verbunden ist. Möchte der Einzelhändler eine Information für einen Kunden eingeben oder abrufen, verbindet sich das Eingabesystem über das Netzwerk mit der Zentraleinheit und die im erfindungsgemäßen Verfahren hinterlegten Schritte werden auf der Zentraleinheit und den angeschlossenen Datenbankeinheiten ausgeführt.

Daneben kann es sich bei dem Eingabesystem auch um ein Notebook, einen PDA (Personal Digital Assistant) oder ein Handy handeln, welches mittels drahtloser Kommunikation eine Informationsgruppe an die Zentraleinheit übersenden kann. Diese Übermittlung kann sowohl mittels SMS (Short Message Service), EMS (Enhanced Messaging Service), MMS (Multimedia Messaging Service), USSD (Unstructured Supplementary Services), E-Mail oder analoger Sprachinformationen geschehen. Durch eine jeweilige Anpassung einer Empfangseinheit in der Zentraleinheit ist eine Auswertung der so übermittelten Informationsgruppen realisierbar.

Die Zentraleinheit fungiert dabei als steuernder Kern, über welchen die Informationselemente an die Datenbankeinheiten verteilt werden. Im Rahmen der Erfindung kann die Zentraleinheit sowohl eine einzelne Hardwarekomponente sein als auch eine Mehrzahl untereinander synchronisierter, dezentral verteilter Subkomponenten. Es muss nur sichergestellt werden, dass für einen Außenstehenden die Zentraleinheit als eine einheitliche Verarbeitungseinheit erkennbar ist, in welcher die Informationsgruppen aufgeteilt und gemäß den Informationsklassen an die Applikationselemente der Datenbankeinheiten übermittelt werden. Dabei kann das Applikationselement räumlich mit der Datenbank verbunden sein, um die Datenbankeinheit zu bilden. Dieses ist allerdings nicht zwingend, da das Applikationselement auch über ein Netzwerk mit einer räumlich getrennten Datenbank verbunden sein kann. Entscheidend im Rahmen der Erfindung ist vielmehr nur, dass jede der Datenbankeinheiten einer eindeutigen Informationsklasse zugeordnet ist.

Im Rahmen des erfindungsgemäßen Verfahrens werden die Subelemente im Wesentlichen synchron in den Datenbanken verarbeitet. In einer vorteilhaften Ausgestaltung enthalten die Subelemente eine Abfrage oder eine Angabe. Folglich umfasst das Verarbeiten der Subelemente ein Auslesen eines Datensatzes aus der Datenbank oder eine Änderung eines in der Datenbank enthaltenen Datensatzes. Im letzteren Fall führt die Verarbeitung eines Subelementes zu einer Veränderung des Bestandes der Datenbank. Alternativ kann das Subelement zu Generierung eines Datensatzes innerhalb der Datenbank führen, etwa bei der Integration eines neuen Benutzers einer Dienstleistung. In diesem Fall hinterlegt das Subelement in einem bisher nicht genutzten Speicherplatz den entsprechenden Datensatz, welcher die neuen Benutzerangaben beinhaltet.

Im Anschluss an die Verarbeitung von Informationsgruppen in den Datenbankeinheiten kann es nötig sein, ein Ergebnis auf den Eingabesystemen darzustellen. Dieses wird im Rahmen einer weiteren vorteilhaften Ausgestaltung des erfindungsgemäßen Verfahrens erreicht, welche dadurch ausgezeichnet ist, dass im Anschluss an die Verarbeitung des Subelementes
- die Datenbanken die Subelemente in Aussagesubelemente umwandelt,
- die Applikationsroutinen die Aussagesubelemente zu Aussageelementen zusammenführt, und
- die Zuordnungsroutine in der Zentraleinheit die Aussageelemente in eine Aussagegruppe zusammenführt.

Durch die Verarbeitung der Subelemente in den Datenbanken entstehen die für einen Benutzer informativen Aussagesubelemente. Diese Aussagesubelemente werden innerhalb der Applikationsroutine zu einem Aussageelement verdichtet. Anschließend fügt die Zentraleinheit die Aussageelemente aus den verschiedenen Datenbankeinheiten zusammen und erzeugt eine Aussagegruppe, das logische Gegenstück zur Informationsgruppe. Vorteilhafterweise kann die Aussagegruppe auf dem Eingabesystem dargestellt werden. Dazu kann beispielsweise ein webfähiger Browser Verwendung finden, der auf einem entsprechenden Computer läuft und mit der Zentraleinheit über ein Netzwerk verbunden ist.

Das erfindungsgemäße Verfahren dient dazu, datenbankübergreifend auf Datenbankeinheiten im Wesentlichen parallel Datensätze zu manipulieren. Sowohl bei den Datensätzen als auch bei den Informationsgruppen kann es sich um wirtschaftlich sehr bedeutende Informationen, wie etwa Kundendaten von Banken, handeln. Folglich muss sichergestellt werden, dass eine Informationsgruppe immer vollständig bearbeitet wird. Entsprechend muss verhindert werden, dass nur einzelne Datenbankeinheiten die Informationselemente verarbeiten, während andere Datenbankeinheiten dieses nicht tut. Eine so entstehende Inkonsistenz in den Datensätzen der Datenbanken könnte weitreichende Folgen haben. Aus diesem Grund ist in einer weiteren vorteilhaften Ausgestaltung des Verfahrens vorgesehen, dass eine Koordinatorroutine überwacht, dass alle oder keines der Informationselemente an die Datenbankeinheiten übermittelt wird. Die Koordinatorroutine kontrolliert folglich, dass jede Datenbankeinheit das ihr zugewiesene Informationselement erhält. Nur in diesem Fall ist sichergestellt, dass alle Datenbankeinheiten die Informationselemente weiter verarbeiten können. Registriert die Koordinatorroutine hingegen, dass eine Datenbankeinheit das ihr zugewiesene Informationselement nicht erhält, kann - wie im Folgenden noch näher dargelegt wird - reagiert werden, um eine Inkonsistenz in den Datenbankeinheiten zu verhindern. Vorteilhafterweise wird die Koordinatorroutine in der Zentraleinheit und/oder in den Applikationselementen ausgeführt. Durch eine Kombination einer zentralen und wenigstens einer dezentralen Koordinatorroutine ist eine vollständige Überwachung der Verarbeitung der Informationsgruppen in den einzelnen Elementen des Datenbanksystems gewährleistet.

Eine vorteilhafte Ausführungsvariante des erfindungsgemäßen Verfahrens ist dahingehend erweitert, dass
- die Informationselemente übermittelt werden,
- die Informationselemente sowie der hinterlegte Datensatz in der Datenbankeneinheiten gespeichert werden,
- die Koordinatorroutine eine Zustimmung oder eine Ablehnung zu einer Übermittlung der Informationselemente von allen Datenbankeneinheiten einholt,
- nur bei einer einheitlichen Zustimmung jede Datenbankeneinheit von der Koordinatorroutine informiert wird, dass die Übermittlung der Informationselemente durchgeführt wird, und
- der hinterlegte Datensatz gelöscht wird.

Im Rahmen dieser Ausführungsvariante des Verfahrens überwacht die Koordinatorroutine die Übermittlung der Informationselemente an die Datenbankeinheiten. Die Überwachung geschieht dabei in zwei Schritten. Zuerst findet eine Übermittlung der Informationselemente an die Datenbankeinheiten statt. Um sicherzustellen, dass eine Veränderung der in den Datenbanken der Datenbankeinheiten hinterlegen Datensätze nur dann erfolgt, wenn diese von allen Datenbankeinheiten ausgeführt wird, findet zuerst eine Speicherung der neu übermittelten Informationselemente sowie der bisher gespeicherten und für eine Veränderung vorgesehenen Datensätze statt. Jede Datenbankeinheit, die ein Informationselement erhält, informiert die Koordinatorroutine über diese Tatsache. Die Koordinatorroutine überwacht, ob alle betroffenen Datenbankeinheiten eine entsprechende Rückmeldung übermitteln. Erst in dem Falle, dass alle betroffenen Datenbankeinheiten den Empfang sowie die Bereitschaft zur Änderung der Datensätze bestätigen, findet eine entsprechende Benachrichtigung durch die Koordinatorroutine statt, welche die eigentliche Verarbeitung der Informationselemente auslöst.

Eine weitere vorteilhafte Ausführungsvariante zeichnet sich dadurch aus, dass
- vor einer Verarbeitung der Subelemente, die Subelemente sowie der hinterlegte Datensatz gespeichert werden,
- die Subelemente verarbeitet werden,
- die Koordinatorroutine eine Zustimmung oder eine Ablehnung zu einer Festschreibung der Verarbeitung der Subelemente von allen Datenbanken einholt,
- nur bei einer einheitlichen Zustimmung jede Datenbank von der Koordinatorroutine informiert wird, dass die Verarbeitung der Subelemente durchgeführt wird, und
- der hinterlegte Datensatz gelöscht wird.

Die Verarbeitung der Subelemente stellt die eigentliche Manipulation von Datensätzen in den Datenbanken dar. Um auch hier Inkonsistenzen zwischen den einzelnen Datensätzen in den Datenbanken zu verhindern, kontrolliert die Koordinatorroutine die Verarbeitung der Subelemente. Dabei werden zuerst das Subelement sowie der hinterlegte Datensatz gespeichert, woran sich die Verarbeitung des Subelementes anschließt. Erst wenn die Koordinatorroutine von allen die Subelemente verarbeitenden Prozessen ein positives Signal bzgl. der Verarbeitung erhält, wird der sich durch die Verarbeitung ergebende neue Datensatz in die Datenbanken hineingeschrieben. Dadurch ist sichergestellt, dass nur eine einheitliche Verarbeitung aller Subelemente innerhalb der Datenbanken stattfindet.

Darüber hinaus kann die Koordinatorroutine in einer weiteren vorteilhaften Ausgestaltung überwachen, ob alle oder keines der Subelemente in einer Datenbank quasi parallel verarbeitet werden. In diesem Falle führt die Koordinatorroutine eine weitere Überwachungsaufgabe durch, die innerhalb einer einzelnen Datenbankeinheit stattfindet. Dieses dient zur Kontrolle, ob alle Subelemente in einer einzelnen Datenbank verarbeitet werden, um die Konsistenz der Datensätze innerhalb einer Datenbankeinheit zu gewährleisten.

Eine die vorgenannten Ausführungsvarianten verbessernde Version des erfindungsgemäßen Verfahrens sieht vor, dass bei einer nichteinheitlichen Zustimmung der Datenbank bzw. den Datenbanken die Verarbeitung der Subelemente und/oder die Übermittlung der Informationselemente als nicht durchgeführt gilt und keine Verarbeitung der Subelemente und/oder keine Übermittlung der Informationselemente ausgeführt wird. Sollte beispielsweise die Übermittlung der Informationselemente an eine Datenbankeinheit fehlschlagen, erhält die Kontrollroutine von dieser Datenbankeinheit keine positive Zustimmung. Um eine Inkonsistenz in den Datensätzen zu verhindern, gibt die Koordinatorroutine nicht die Freigabe für die Übermittlung. Folglich verwerfen alle anderen Datenbankeinheiten das Informationselement, ungeachtet der Tatsache, dass diese Datenbankeinheiten das Informationselement problemlos empfangen haben. Bei dieser Ausführungsvariante reicht eine einzige Unstimmigkeit in der Übermittlung an eine Datenbankeinheit aus, um die gesamte Übermittlung als nicht durchführbar zu verwerfen. Vorteilhafterweise kann es vorgesehen sein, dass in diesem Falle ein weiterer Übermittlungsversuch der Informationselemente an alle Datenbankeinheiten vorgenommen wird. Eine entsprechende ausgeformte Zeitschleife, die eine zweite Übermittlung nach Ablauf einer gewissen Zeitperiode auslöst, kann in der Zentraleinheit hinterlegt sein. Darüber hinaus ist es denkbar, dass die Zentraleinheit einen Fehlerprotokollspeicher aufweist, in dem eine Nachricht über die fehlgeschlagene Übermittlung der Informationselemente hinterlegt wird.

Zusätzlich kann auch eine Verarbeitung der Subelemente verhindert werden, falls eine nicht einheitliche Zustimmung der Datenbank vorliegt. In diesem Falle könnte beispielsweise das Hinterlegen eines Subelementes - etwa eine Zahl oder ein Name - in der Datenbank fehlgeschlagen sein. Um Inkonsistenzen innerhalb der Datenbank einer Datenbankeinheit zu verhindern, wird in diesem Fall von der Weiterverarbeitung aller Subelemente abgesehen. Auch hier kann eine entsprechende Nachricht der Zentraleinheit zugeführt werden, um von der Verarbeitung der gesamten Informationsgruppe abzusehen.

Wie schon oben dargelegt, erfolgt die Verarbeitung der Subelemente in den Datenbanken quasi parallel. Um dieses zu ermöglichen, ist eine weitere vorteilhafte Ausführungsvariante dadurch gekennzeichnet, dass eine Dispatcherroutine für eine Übermittlung der Subelemente an die Datenbank genutzt wird. Diese Dispatcherroutine kann insbesondere die Subelemente in eine Übermittlungswarteschlange einordnen. Ausgangspunkt dafür ist, dass die Subelemente nicht direkt auf die Datenbank zugreifen sollen. Vielmehr sorgt die Dispatcherroutine für eine geordnete Übermittlung der Subelemente an die Datenbank. Darüber hinaus können die Subelemente aus der Übermittlungswarteschlange durch eine Datenbankroutine abgeholt werden. Um eine verbesserte, quasi parallele Verarbeitung der Subelemente in einer Datenbank zu erreichen, kann eine Mehrzahl von Datenbankroutinen auf der Datenbank ausgeführt werden. Jede der parallel laufenden Datenbankroutinen greift auf ein in der Übermittlungswarteschlange angeordnetes Subelement zu und verarbeitet dieses. Dadurch wird eine quasi parallele Verarbeitung einer durch die Anzahl der Datenbankroutinen begrenzten Reihe von Subelementen erreicht. Dieses Verfahren stellt sicher, dass die Datenbank nicht durch eine übergroße Anzahl von Subelementen überschwemmt und in ihrer Leistungsfähigkeit gehemmt wird. Vielmehr kann durch die auf die Datenbank abgestimmte Anzahl von Datenbankroutinen eine zügige Abarbeitung der Subelemente sichergestellt werden.

Eine die vorgenannten Ausführungsvarianten verbessernde Version des erfindungsgemäßen Verfahrens sieht vor, dass die Koordinatorroutine eine Two-Phase-Commit Technologie verwendet. Weiterhin kann in einer vorteilhaften Variante in den Datenbankeinheiten eine MTS (mulitthread shared server) Technologie Anwendung finden.

Die erfindungsgemäße Aufgabe wird weiterhin gelöst durch ein Datenbanksystem, mit einer Zentraleinheit, einer Mehrzahl von Eingabesystemen und einer Mehrzahl von Datenbankeinheiten, wobei jede Datenbankeinheit eine Datenbank und ein Applikationselement aufweist, in jedem Applikationselement eine Applikationsroutine ausführbar ist, jeder Datenbankeinheit eine individuelle Informationsklasse zuordbar ist und in jeder Datenbankeinheit Informationselemente einer eindeutigen Informationsklasse hinterlegbar sind, mittels eines Eingabesystems eine Informationsgruppe in die Zentraleinheit eingebbar ist, wobei die Informationsgruppe mehrere Informationselemente aufweist, die Informationsgruppe mittels einer Zuordnungsroutine in der Zentraleinheit in Informationselemente zerlegbar ist, die Informationselemente in Abhängigkeit von der Informationsklasse an die der Informationsklasse zugeordnete Datenbankeinheit übermittelbar sind, die Informationselemente mittels der Applikationsroutine derart in Subelemente zerlegbar sind, das dieses Subelemente quasi parallel in der Datenbank verarbeitbar sind.

Darüber hinaus kann das Datenbanksystem nach einem der vorher beschriebenen Verfahren betrieben werden, um das oben genannte Problem zu überwinden.

Weitere Maßnahmen, Merkmale, Aspekte und Effekte der Erfindung ergeben sich aus den Unteransprüchen, der nachfolgenden Beschreibung sowie den Zeichnungen. In den Zeichnungen ist die Erfindung in mehreren Ausführungsbeispielen schematisch dargestellt. Es zeigen:
- Fig. 1: eine schematische Ansicht eines Datenbanksystems,
- Fig. 2: ein Flussdiagramm einer ersten Variante eines erfindungsgemäßen Verfahrens und
- Fig. 3: ein Flussdiagramm einer zweiten Variante des erfindungsgemäßen Verfahrens.

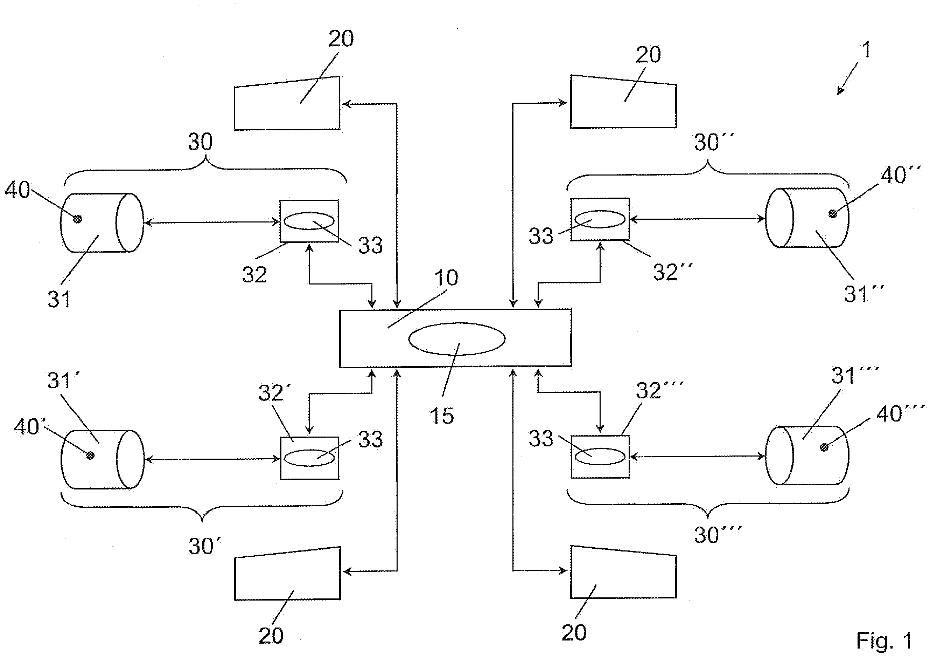

In Fig. 1 ist eine schematische Übersicht über ein Datenbanksystem 1 dargestellt, auf welchem das erfindungsgemäße Verfahren angewendet werden kann. Das Datenbanksystem 1 weist eine Mehrzahl von Datenbankeinheiten 30,30',30",30"' auf. Diese Datenbankeinheiten 30,30',30",30'" sind mit einer Zentraleinheit 10 verbunden. Die Verbindung kann mittels eines Netzwerkes erfolgen, so dass die Datenbankeinheiten 30,30',30",30'" nicht in einer räumlichen Nähe zur Zentraleinheit 10 angeordnet sein müssen. Ebenfalls an die Zentraleinheit 10 angeschlossen ist eine Mehrzahl - hier vier - von Eingabesystemen 20. Jede Datenbankeinheit 30,30',30",30'" weist eine Datenbank 31,31',31",31'" und ein Applikationselement 32,32',32",32'" auf. Die Datenbank 31,31',31",31'" ist jenes Element der Datenbankeinheit 30,30',30",30'", im welchem Datensätze physikalisch hinterlegt werden können. In jedem Applikationselement 32,32',32",32'" ist eine Applikationsroutine 33 ausführbar. Die Applikationsroutine 33 ist für die Kommunikation der Datenbankeinheit 30,30',30",30'" bzw. der Datenbank 31,31',31",31'" mit der Zentraleinheit 10 vorgesehen. Das Applikationselement 32,32',32",32'" kann in örtlicher Nähe zur Datenbank 31,31',31",31"' oder zur Zentraleinheit 10 angeordnet sein. In jedem Fall allerdings weist eine Datenbankeinheit 30,30',30",30'" ein zugeordnetes Applikationselement 32,32',32",32'" auf. Eine Kommunikation zwischen den einzelnen Elementen des Datenbanksystem 1, insbesondere zwischen dem Applikationselement 32,32',32",32'" und der Datenbank 31,31',31",31'" kann auch drahtlos, bevorzugt mittels Bluetooth oder Mobilfunk, erfolgen.

Ausgangspunkt für das erfindungsgemäße Verfahren ist es, dass jede Datenbank 31,31',31",31"' Datensätze speichert, welche einer individuellen Informationsklasse 40,40',40",40'" zugeordnet sind. Beispielhaft kann es sich bei den Informationsklassen 40,40',40",40'" um unterschiedliche Vertragstypen eines Mobilfunkanbieters handeln. Die vier in Fig. 1 dargestellten Datenbanken 31,31',31",31"' können dementsprechend unterschiedliche, nicht miteinander kompatible Vertragstypen eines Mobilfunkanbieters darstellen. Schließt ein Kunde einen ersten Vertrag mit dem Mobilfunkanbieter ab, werden die entsprechenden Datensätze in einer Datenbank 31 hinterlegt. Möchte derselbe Kunde zu einem späteren Zeitpunkt einen anders gearteten Vertrag abschließen, werden die dafür benötigen Daten in einer anderen Datenbank 31' hinterlegt. Ausgangspunkt für die Erfindung war der Gedanke, dass in der Zukunft ein Vertragstyp entstehen könnte, bei dem es notwendig ist, auf mehrere Datenbanken 31,31',31",31"' quasi parallel zuzugreifen. So könnte es etwa einen Bonustarif dafür geben, dass ein Kunde eine Mehrzahl von Verträgen mit einem Mobilfunkanbieter abgeschlossen hat. Um diese Bonustarife zu verwalten, muss ein quasi paralleler Zugriff auf mehrere Datenbanken 31,31',31",31"' von einem der Eingabesysteme 20 möglich sein.

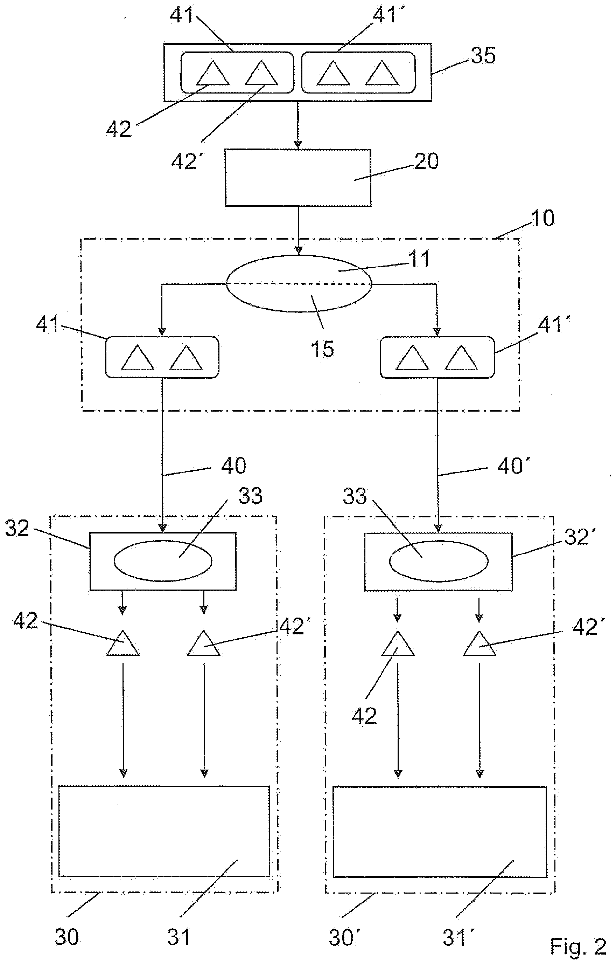

Der Ablauf des erfindungsgemäßen Verfahrens ist in Fig. 2 mittels eines Flussdiagramms verdeutlicht. Dabei wird angenommen, dass das Datenbanksystem 1 nur über zwei Datenbankeinheiten 30,30' verfügt. Über das Eingabesystem 20 kann eine Informationsgruppe 35 in die Zentraleinheit 10 eingegeben werden. Inhalt der Informationsgruppe 35 ist eine Mehrzahl an Informationselementen 41,41', die einer Informationsklasse 40,40' und damit einer eindeutigen Datenbankeinheit 30,30' zugeordnet sind. Innerhalb der Zentraleinheit 10 spaltet eine Zuordnungsroutine 11 die Informationsgruppe 35 in die Informationselemente 41,41' auf, wobei die Aufspaltung anhand der Informationsklassen 40,40' erfolgt. Die somit erzielten Informationselemente 41,41' können vollständig und quasi parallel in je einer Datenbankeinheit 30,30' verarbeitet werden. Wie das Flussdiagramm verdeutlicht, werden beide Informationselemente 41,41' in Abhängigkeit von ihrer Informationsklasse 40,40' an die Datenbankeinheiten 30,30' übermittelt. Da die Datenbankeinheiten 30,30' nur Informationselemente 41,41' erhält, welche mit der zugeordneten Informationsklasse 40,40' übereinstimmen, ist der Informationsfluss innerhalb des die einzelnen Elemente des Datenbanksystems 1 verbindenden Netzwerkes gering. Eine Übermittlung von Informationselementen 41,41' einer abweichenden Informationsklasse 40,40' an eine dafür nicht vorgesehene Datenbankeinheit 30,30' findet nicht statt.

Innerhalb der Datenbankeinheit 30,30' ist die Applikationsroutine 33 angeordnet. Diese Applikationsroutine 33 zerlegt das Informationselement 41,41' ein weiteres Mal in die Subelemente 42,42'. Die beiden Subelemente 42,42' können dann quasi parallel in der Datenbank 31,31' verarbeitet werden. Wie das Flussdiagramm verdeutlicht, findet erfindungsgemäß eine zweifache Aufteilung der Informationsgruppe 35 statt. Dabei wird zuerst die Informationsgruppe 35 in zwei Informationselemente 41,41' aufgeteilt, woran sich eine weitere Aufteilung der Informationselemente 41,41' innerhalb der Datenbankeinheit 30,30' in die Subelemente 42,42' anschließt.

Damit keine Inkonsistenzen innerhalb des Datenbanksystems auftreten, kann erfindungsgemäß vorgesehen sein, dass in der Zentraleinheit 10 und/oder in den Applikationselementen 32,32' jeweils eine oder mehrere Koordinatorroutinen 15 ausgeführt werden. So kann beispielsweise in der Zentraleinheit 10 eine Koordinatorroutine 15 arbeiten, die sicherstellt, dass nur bei einer einheitlichen Übermittlung aller Informationselemente 41,41' an alle Datenbankeinheiten 30,30' die Applikationsroutinen 32,32' mit dem Verfahren fortfahren.

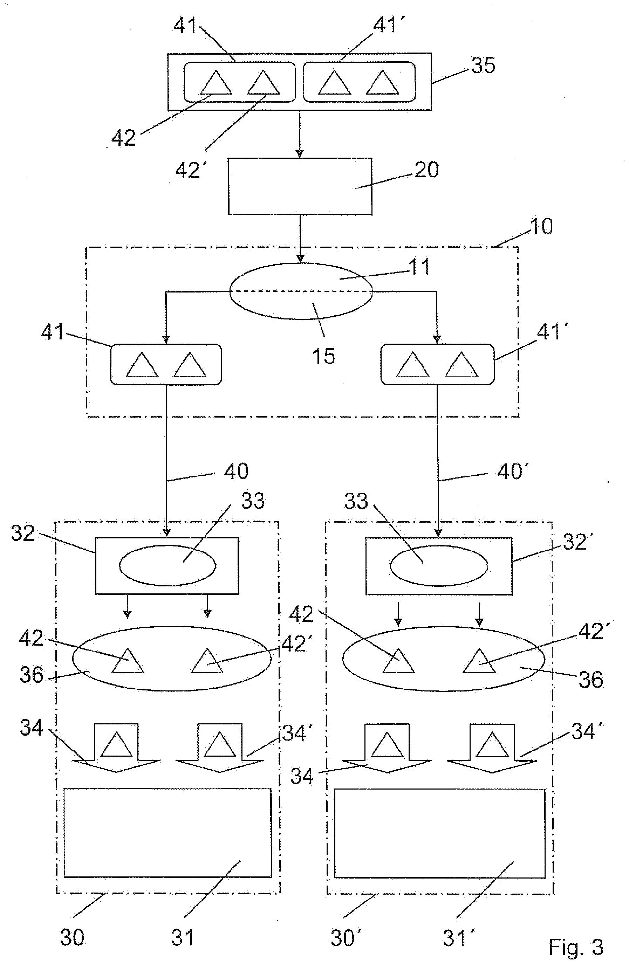

Die Fig. 3 verdeutlicht eine weitere Ausführungsvariante des erfindungsgemäßen Verfahrens, bei der in jeder Datenbankeinheit 30,30' eine Dispatcherroutine 36 für eine Übermittlung der Subelemente 42,42' an die Datenbankeinheit 31,31' genutzt wird. Dazu überführt die Dispatcherroutine 36 die Subelemente 42,42' in eine Übermittlungswarteschlange. Aus der nicht dargestellten Übermittlungswarteschlange werden die Subelemente 42,42' quasi parallel von einer Mehrzahl von Datenbankroutinen 34,34' abgeholt. Jede der Datenbankroutinen 34,34' verarbeitet ein Subelement 42,42' innerhalb der Datenbank 31,31'. Ist ein Subelement 42,42' abgearbeitet, überprüft die Datenbankroutine 34,34' ob noch weitere Subelemente 42,42' in der Übermittlungswarteschlange vorhanden sind. Ist dieses der Fall, wird der Datenbankroutine 34,34' automatisch ein neues Subelement 42,42' zur Verarbeitung zugewiesen.

Das erfindungsgemäße Datenbanksystem 1 sowie das erfindungsgemäße Verfahren ermöglichen die datenbankübergreifende quasi parallele Verarbeitung von Informationsgruppen 35 zum einen durch eine Aufspaltung in unterschiedliche Informationselemente 41,41'. Zum anderen ermöglicht die Verwendung der Dispatcherroutine 36 und der Datenbankroutinen 34,34' eine quasi parallele und sichere Verarbeitung von Informationsgruppen auf einer Mehrzahl von Datenbankeinheiten 30,30',30",30"'. Darüber hinaus sichert die Koordinatorroutine 15 eine fehlerfreie Bearbeitung der Informationselemente 41,41'.

### Bezugszeichenliste

- 1: Datenbanksystem

- 10: Zentraleinheit
- 11: Zuordnungsroutine
- 15: Koordinatorroutine

- 20: Eingabesystem

- 30,30',30",30"': Datenbankeinheit
- 31,31',31",31'": Datenbank
- 32,32',32",32'": Applikationselement
- 33: Applikationsroutine
- 34,34': Datenbankroutine
- 35: Informationsgruppe
- 36: Dispatcherroutine

- 40,40',40",40'": Informationsklasse
- 41,41': Informationselemente
- 42,42': Subelemente

## Patentansprüche

1. Verfahren zur Steuerung von datenbankübergreifenden Routinen, um Daten in einer Mehrzahl von Datenbankeinheiten (30,30',30",30"') quasi parallel zu manipulieren, wobei
- an einer Zentraleinheit (10) eine Mehrzahl von Eingabesystemen (20) angeschlossen ist,
- jede Datenbankeinheit (30,30',30",30'") eine Datenbank (31,31'.31",31'"), ein Applikationselement (32, 32',32",32"') und eine auf dem Applikationselement (32,32',32",32'") ausführbare Applikationsroutine (33) aufweist,
- jeder Datenbankeinheit (30,30',30",30'") eine eindeutige Informationsklasse (40,40',40",40'") zugeordnet ist,
- in jeder Datenbankeinheit (30,30',30",30") Informationselemente (41,41') einer eindeutigen Informationsklasse (40,40',40",40'") hinterlegt sind,
wobei das Verfahren die folgenden Schritte umfaßt:
- mittels eines Eingabesystems (20) wird eine Informationsgruppe (35) in die Zentraleinheit (10) eingegeben, wobei die Informationsgruppe (35) mehrere Informationselemente (41,41) beinhaltet und jedes Informationselement (41,41') einer Informationsklasse (40,40',40",40'") zugeordnet ist.
- in einer Zuordnungsroutine (11) in der Zentraleinheit (10) wird die Informationsgruppe (35) in die Informationselemente (41,41') zerlegt,
- die Zuordnungsroutine (11) übermittelt die Informationselemente (41,41') in Abhängigkeit von der Informationsklasse (40,40',40",40"') an die der Informationsklasse (40,40',40",40"') zugeordnete Datenbankeinheit (30,30',30",30'"),
- die Applikationsroutinen (33) in den Datenbankeinheiten (30,30',30",30'") zerlegen die Informationselemente (41,41') in Subelemente (42,42'),
- die Subelemente (42,42') werden quasi parallel in den Datenbanken (31,31',31",31"') verarbeitet.

2. Verfahren nach Anspruch 1, **dadurch gekennzeichnet, daß** ein Subelement (42,42') eine Abfrage oder eine Angabe enthält, insbesondere daß eine Verarbeitung eines Subelementes (42,42') zu einer Veränderung eines in der Datenbank (31,31',31",31"') hinterlegten Datensatzes führt.

3. Verfahren nach einem der Ansprüche 1 oder 2, **dadurch gekennzeichnet, daß** im Anschluß an die Verarbeitung des Subelementes (42,42')
- die Datenbanken (31,31',31",31"') die Subelemente (42.42') in Aussagesubelemente umwandeln,
- die Applikationsroutinen (33) die Aussagesubelemente zu Aussageelementen zusammenführen und
- die Zuordnungsroutine (11) in der Zentraleinheit (10) die Aussageelemente in eine Aussagegruppe zusammenführt.

4. Verfahren nach Anspruch 3, **dadurch gekennzeichnet, daß** die Aussagegruppe auf dem Eingabesystem (20) dargestellt wird.

5. Verfahren nach einem der vorhergehenden Ansprüche. **dadurch gekennzeichnet, daß** eine Koordinatorroutine überwacht, daß alle oder keines der Informationselemente (41,41') an die Datenbankeneinheiten (30,30',30",30'") übermittelt werden bzw. wird, insbesondere daß die Koordinatorroutine überwacht, daß alle oder keines der Subelemente (42,42') in den Datenbanken (31,31',31",31'") quasi parallel verarbeitet werden bzw. wird.

6. Verfahren nach Anspruch 5, **dadurch gekennzeichnet, daß** die Koordinatorroutine in der Zentraleinheit (10) und/oder in den Applikationselementen (32,32',32",32'") ausgeführt wird.

7. Verfahren nach Anspruch 5 oder 6, **dadurch gekennzeichnet, daß**
- die Informationselemente (41,41') übermittelt werden,
- die Informationselemente (41,41') sowie der hinterlegte Datensatz in den Datenbankeneinheiten (30,30',30",30'") gespeichert werden,
- die Koordinatorroutine eine Zustimmung oder eine Ablehnung zu einer Übermittlung der Informationselemente (41,41') von allen Datenbankeneinheiten (30,30',30",30'") einholt,
- nur bei einer einheitlichen Zustimmung jede Datenbankeneinheit (30.30',30",30'") von der Koordinatorroutine informiert wird, daß die Übermittlung der Informationselemente (41,41') durchgeführt wird, und
- der hinterlegte Datensatz gelöscht wird.

8. Verfahren nach Anspruch 5 oder 6, **dadurch gekennzeichnet, daß**
- vor einer Verarbeitung der Subelemente (42,42'). die Subelemente (42,42') sowie der hinterlegte Datensatz gespeichert werden,
- die Subelemente (42,42') verarbeitet werden,
- die Koordinatorroutine eine Zustimmung oder eine Ablehnung zu einer Festschreibung der Verarbeitung der Subelemente (42,42') von allen Datenbanken (31,31',31",31"') einholt,
- nur bei einer einheitlichen Zustimmung jede Datenbank (31,31',31",31"') von der Koordinatorroutine informiert wird, daß die Verarbeitung der Subelemente (42,42') durchgeführt wird, und
- der hinterlegte Datensatz gelöscht wird.

9. Verfahren nach einem der Ansprüche 7 oder 8, **dadurch gekennzeichnet, daß** bei einer nichteinheitlichen Zustimmung der Datenbank (31,31',31",31"') die Verarbeitung der Subelemente (42,42') und/oder die Übermittlung der Informationselemente (41,41') als nicht durchgeführt gelten und keine Verarbeitung der Subelemente (42,42') und/oder keine Übermittlung der Informationselemente (41,41') ausgeführt werden.

10. Verfahren nach einem der vorhergehenden Ansprüche, **dadurch gekennzeichnet, daß** eine Dispatcherroutine (36) für eine Übermittlung der Subelemente (42,42') an die Datenbank (31,31',31 ",31"') genutzt wird, insbesondere daß die Dispatcherroutine (36) die Subelemente (42,42') in eine Übermittlungswarteschlange einordnet.

11. Verfahren nach Anspruch 10, **dadurch gekennzeichnet, daß** die Subelemente (42,42') aus der Übermittlungswarteschlage durch eine Datenbankroutine (34,34') abgeholt werden, insbesondere daß eine Mehrzahl von Datenbankroutinen (34,34') auf jeder Datenbank (31,31',31",31'") ausgeführt wird.

12. Verwendung des Verfahrens nach einem der vorhergehenden Ansprüche 1 bis 11 zur Ausführung oder Steuerung von Routinen, um Daten in einer Mehrzahl von Datenbankeinheiten (30,30',30",30"') quasi parallel zu manipulieren.

13. Datenbankensystem, mit einer Zentraleinheit (10), einer Mehrzahl von Eingabesystemen (20) und einer Mehrzahl von Datenbankeinheiten (30,30',30".30'"), wobei
- jede Datenbankeinheit (30,30',30",30"') eine Datenbank (31,31',31",31'") und ein Applikationselement (32,32',32",32'") aufweist, wobei das Datenbanksystem so konfiguriert ist das
- in jedem Applikationselement (32,32',32",32"') eine Applikationsroutine (33) ausgeführt wird,
- jeder Datenbankeinheit (30,30',30",30'") eine individuelle Informationsklasse (40,40',40",40'") zugeordnet wird und in jeder Datenbankeinheit (30,30',30",30"') Informationselemente (41,41') einer eindeutigen Informationsklasse (40,40',40",40") hinterlegt werden,
- mittels eines Eingabesystems (20) eine Informationsgruppe (35) in die Zentraleinheit (10) eingegeben wird, wobei die Informationsgruppe (35) mehrere Informationselemente (41,41') aufweist,
- die Informationsgruppe (35) mittels einer Zuordnungsroutine (11) in der Zentraleinheit (10) in Informationselemente (41,41') zerlegt wird
- die Informationselemente (41,41') in Abhängigkeit von der Informationsklasse (40,40',40",40'") an die der Informationsklasse zugeordnete Datenbankeinheit (30,30',30",30'") übermittelt werden und
- die Informationselemente (41.41') mittels der Applikationsroutine (33) derart in Subelemente (42,42') zerlegt werden, daß dieses Subelemente (42,42') quasi parallel in der Datenbank (31,31',31",31"') verarbeitet werden.

14. Datenbankensystem nach Anspruch 13, welches nach einem der Verfahren gemäß Anspruch 1 bis 11 betreibbar ist.

## Claims

1. A method for controlling routines across databases in order to manipulate data in a plurality of database units (30, 30', 30", 30"') in a quasi-parallel manner, wherein
- a plurality of input systems (20) is connected to a central unit (10),
- each database unit (30, 30', 30", 30'") comprises a database (31, 31', 31", 31'"), an application element (32, 32', 32", 32'") and an application routine (33) which can be executed on the application element (32, 32', 32", 32'"),
- each database unit (30, 30', 30", 30'") is allocated a unique information class (40, 40', 40", 40'"),
- information elements (41, 41') of a unique information class (40, 40', 40", 40'") are deposited in each database unit (30, 30', 30", 30'"),
wherein the method comprises the following steps:
- an information group (35) is input into the central unit (10) by means of an input system (20), wherein the information group (35) contains a plurality of information elements (41, 41) and each information element (41, 41') is allocated to an information class (40, 40', 40", 40'"),
- in an allocation routine (11) in the central unit (10) the information group (35) is broken down into the information elements (41, 41'),
- the allocation routine (11) transmits the information elements (41, 41') depending on the information class (40, 40', 40", 40'") to the database unit (30, 30', 30", 30'") allocated to the information class (40, 40', 40", 40'"),
- the application routines (33) in the database units (30, 30', 30", 30'") break down the information elements (41, 41') into sub-elements (42, 42'),
- the sub-elements (42, 42') are processed in a quasi-parallel manner in the databases (31, 31', 31", 31'").

2. The method according to claim 1, **characterized in that** a sub-element (42, 42') contains an interrogation or a specification, in particular that a processing of a sub-element (42, 42') results in a variation of a dataset stored in the database (31, 31', 31", 31'").

3. The method according to one of claims 1 or 2, **characterized in that** following the processing of the sub-element (42, 42')
- the databases (31, 31', 31", 311"') convert the sub-element (42, 42') into predication sub-elements,
- the application routines (33) combine the predication sub-elements into predication elements and
- the allocation routine (11) in the central unit (10) combines the predication elements into a predication group.

4. The method according to claim 3, **characterized in that** the predication group is presented on the input system (20).

5. The method according to one of the preceding claims, **characterized in that** a coordinator routine monitors that all or none of the information elements (41, 41') are or is transmitted to the database units (30, 30', 30", 30'"), in particular that the coordinator routine monitors that all or none of the sub-elements (42, 42') are or is processed in a quasi-parallel manner in the databases (31, 31', 31", 31'").

6. The method according to claim 5, **characterized in that** the coordinator routine is executed in the central unit (10) and/or in the application elements (32, 32', 32", 32'").

7. The method according to claim 5 or 6, **characterized in that**
- the information elements (41, 41') are transmitted,
- the information elements (41, 41') and the deposited dataset are stored in the database units (30, 30', 30", 30'"),
- the coordinator routine seeks an agreement or a refusal to a transmission of the information elements (41, 41') from all the database units (30, 30', 30", 30'"),
- only when there is uniform agreement, each database unit (30, 30', 30", 30'") is informed by the coordinator routine that the transmission of the information elements (41, 41') is performed and
- the deposited dataset is deleted.

8. The method according to claim 5 or 6, **characterized in that**
- before a processing of the sub-elements (42, 42'), the sub-elements (42, 42') and the deposited dataset are stored,
- the sub-elements (42, 42') are processed,
- the coordinator routine seeks an agreement or a refusal for a defining of the processing of the sub-elements (42, 42') from all the databases (31, 31', 31", 31'"),
- only when there is a uniform agreement, each database (31, 31', 31", 31'") is informed by the coordinator routine that the processing of the sub-elements (42, 42') is performed and
- the deposited dataset is deleted.

9. The method according to one of claims 7 or 8, **characterized in that** when there is non-uniform agreement of the database (31, 31', 31", 31'"), the processing of the sub-elements (42, 42') and/or the transmission of the information elements (41, 41') is considered to be not executed and no processing of the sub-elements (42, 42') and/or no transmission of the information elements (41, 41') are executed.

10. The method according to one of the preceding claims, **characterized in that** a dispatcher routine (36) is used for a transmission of the sub-elements (42, 42') to the database (31, 31', 31", 31'"), in particular that the dispatcher routine (36) arranges the sub-elements (42, 42') into a transmission queue.

11. The method according to claim 10, **characterized in that** the sub-elements (42, 42') are retrieved from the transmission queue by a database routine (34, 34'), in particular a plurality of database routines are executed on each database (31, 31', 31", 31'").

12. Use of the method according to one of the preceding claims 1 to 11 for executing or controlling routines in order to manipulate data in a plurality of database units (30, 30', 30", 30'") in a quasi-parallel manner.

13. A database system comprising a central unit (10), a plurality of input systems (20) and a plurality of database units (30, 30', 30", 30'"), wherein
- each database unit (30, 30', 30", 30'") comprises a database (31, 31', 31", 31'") and an application element (32, 32', 32", 32'"), wherein the database system is configured so that
- in each application element (32, 32', 32", 32"') an application routine (33) is executed,
- each database unit (30, 30', 30", 30'") is allocated an individual information class (40, 40', 40", 40'") and in each database unit (30, 30', 30", 30'") information elements (41, 41') of a unique information class (40, 40', 40", 40'") are deposited,
- an information group (35) is input into the central unit (10) by means of an input system (20), wherein the information group (35) comprises a plurality of information elements (41, 41'),
- the information group (35) is broken down into information elements (41, 41') by means of an allocation routine (11) in the central unit (10)
- the information elements (41, 41') are transmitted to the database unit (30, 30', 30", 30'") allocated to the information class depending on the information class (40, 40', 40", 40'") and
- the information elements (41, 41') are broken down into sub-elements (42, 42') by means of the application routine (33) in such a manner that these sub-elements (42, 42') are processed in a quasi-parallel manner in the database (31, 31', 31", 31'").

14. The database system according to claim 13, which can be operated according to one of the methods according to claims 1 to 11.

## Revendications

1. Procédé de commande de routines à travers de multiples bases de données en vue de manipuler quasi parallèlement des données dans une pluralité d'unités de base de données (30, 30', 30", 30"'), dans lequel
- une pluralité de systèmes d'entrée (20) est connectée à une unité centrale (10),
- chaque unité de base de données (30, 30', 30", 30"') présente une base de données (31, 31', 31", 31'"), un élément d'application (32, 32', 32", 32"') et une routine d'application (33) exécutable sur l'élément d'application (32, 32', 32", 32"'),
- à chaque unité de base de données (30, 30', 30", 30"') est associée une classe d'information (40, 40', 40", 40"') unique,
- dans chaque unité de base de données (30, 30', 30", 30"') sont déposés des éléments d'information (41, 41') d'une classe d'information (40, 40', 40", 40"') unique,
le procédé comprenant les étapes suivantes:
- un groupe d'informations (35) est entré dans l'unité centrale (10) à l'aide d'un système d'entrée (20), ledit groupe d'informations (35) contenant une pluralité d'éléments d'information (41, 41') et chaque élément d'information (41, 41') étant associé à une classe d'informations (40, 40', 40", 40"'),
- dans une routine d'association (11) dans l'unité centrale (10), le groupe d'informations (35) est divisé en lesdits éléments d'information (41, 41'),
- la routine d'association (11) transmet les éléments d'information (41, 41') en fonction de la classe d'information (40, 40', 40", 40"') à l'unité de base de données (30, 30', 30", 30"') associée à la classe d'information (40, 40', 40", 40"'),
- les routines d'application (33) dans les unités de base de données (30, 30', 30", 30'") divisent les éléments d'information (41, 41') en sous-éléments (42, 42'),
- les sous-éléments (42, 42') sont traités quasi parallèlement dans les bases de données (31, 31', 31", 31'").

2. Procédé selon la revendication 1, **caractérisé en ce qu'**un sous-élément (42, 42') contient une interrogation ou une indication, en particulier qu'un traitement d'un sous-élément (42, 42') entraîne une modification d'un jeu de données déposé dans la base de données (31, 31', 31", 31"').

3. Procédé selon l'une quelconque des revendications 1 ou 2, **caractérisé en ce que**, suite au traitement du sous-élément (42, 42'),
- les bases de données (31, 31', 31", 31"') convertissent les sous-éléments (42, 42') en sous-éléments d'énoncé,
- les routines d'application (33) réunissent les sous-éléments d'énoncé en éléments d'énoncé, et
- la routine d'association (11) réunit les éléments d'énoncé, dans l'unité centrale (10), en un groupe d'énoncé.

4. Procédé selon la revendication 3, **caractérisé en ce que** le groupe d'énoncé est représenté sur le système d'entrée (20).

5. Procédé selon l'une quelconque des revendications précédentes, **caractérisé en ce qu'**une routine de coordinateur surveille que l'ensemble ou aucun des éléments d'information (41, 41') (ne) sont ou bien est transmis aux unités de base de données (30, 30', 30", 30"'), en particulier que la routine de coordinateur surveille que l'ensemble ou aucun des sous-éléments (42, 42') (ne) sont ou bien est traité(s) quasi parallèlement dans les bases de données (31, 31', 31", 31"').

6. Procédé selon la revendication 5, **caractérisé en ce que** la routine de coordinateur est exécutée dans l'unité centrale (10) et/ou dans les éléments d'application (32, 32', 32", 32"').

7. Procédé selon la revendication 5 ou 6, **caractérisé en ce que**
- les éléments d'information (41, 41') sont transmis,
- les éléments d'information (41, 41') ainsi que le jeu de données déposé sont stockés dans les unités de base de données (30, 30', 30", 30"'),
- la routine de coordinateur va prendre, de la part de toutes les unités de base de données (30, 30', 30", 30"'), un consentement ou un refus relatif à une transmission des éléments d'information (41, 41'),
- uniquement dans le cas d'un consentement uniforme, chaque unité de base de données (30, 30', 30", 30"') est informée par la routine de coordinateur que la transmission des éléments d'information (41, 41') est mise en oeuvre, et
- le jeu de données déposé est effacé.

8. Procédé selon la revendication 5 ou 6, **caractérisé en ce que**
- avant un traitement des sous-éléments (42, 42'), les sous-éléments (42, 42') ainsi que le jeu de données déposé sont stockés,
- les sous-éléments (42, 42') sont traités,
- la routine de coordinateur va prendre, de la part de toutes les bases de données (31, 31', 31", 31"'), un consentement ou un refus relatif à une détermination définitive du traitement des sous-éléments (42, 42'),
- uniquement dans le cas d'un consentement uniforme, chaque base de données (31, 31', 31", 31"') est informée par la routine de coordinateur que le traitement des sous-éléments (42, 42') est mis en oeuvre, et
- le jeu de données déposé est effacé.

9. Procédé selon l'une quelconque des revendications 7 ou 8, **caractérisé en ce que**, dans le cas d'un consentement non uniforme de la base de données (31, 31', 31", 31'"), le traitement des sous-éléments (42, 42') et/ou la transmission des éléments d'information (41, 41') passent pour ne pas avoir été mis en oeuvre et aucun traitement des sous-éléments (42, 42') et/ou aucune transmission des éléments d'information (41, 41') n'est effectué(e).

10. Procédé selon l'une quelconque des revendications précédentes, **caractérisé en ce qu'**une routine de distributeur (36) est utilisée pour une transmission des sous-éléments (42, 42') à la base de données (31, 31', 31", 31"'), en particulier que la routine de distributeur (36) classe les sous-éléments (42, 42') dans une file d'attente de transmission.

11. Procédé selon la revendication 10, **caractérisé en ce que** les sous-éléments (42, 42') sont extraits de la file d'attente de transmission par une routine de base de données (34, 34'), en particulier qu'une pluralité de routines de base de données (34, 34') est exécutée sur chaque base de données (31, 31', 31", 31"').

12. Utilisation du procédé selon l'une quelconque des revendications précédentes 1 à 11, pour exécuter ou commander des routines en vue de manipuler quasi parallèlement des données dans une pluralité d'unités de base de données (30, 30', 30", 30'").

13. Système de base de données, comprenant une unité centrale (10), une pluralité de systèmes d'entrée (20) et une pluralité d'unités de base de données (30, 30', 30", 30'"), dans lequel
- chaque unité de base de données (30, 30', 30", 30"') comprend une base de données (31, 31', 31", 31"') et un élément d'application (32, 32', 32", 32"'), ledit système de base de données étant configuré de telle sorte que
- dans chaque élément d'application (32, 32', 32", 32"') est exécutée une routine d'application (33),
- à chaque unité de base de données (30, 30', 30", 30"') est associée une classe d'information (40, 40', 40", 40"') individuelle, et dans chaque unité de base de données (30, 30', 30", 30"') sont déposés des éléments d'information (41, 41') d'une classe d'information (40, 40', 40", 40"') unique,
- un groupe d'informations (35) est entré dans l'unité centrale (10) à l'aide d'un système d'entrée (20), ledit groupe d'informations (35) présentant une pluralité d'éléments d'information (41, 41'),
- le groupe d'informations (35) est divisé au moyen d'une routine d'association (11), dans l'unité centrale (10), en éléments d'information (41, 41'),
- les éléments d'information (41, 41') sont transmis en fonction de la classe d'information (40, 40', 40", 40"') à l'unité de base de données (30, 30', 30", 30"') associée à la classe d'information, et
- les éléments d'information (41, 41') sont divisés au moyen de la routine d'application (33) en sous-éléments (42, 42') de telle sorte que ces sous-éléments (42, 42') sont traités quasi parallèlement dans la base de données (31, 31', 31", 31'").

14. Système de base de données selon la revendication 13, que l'on peut faire fonctionner suivant l'un quelconque des procédés selon la revendication 1 à 11.
